Europäisches Patentamt

European Patent Office

Office européen des brevets

(11) Veröffentlichungsnummer : **0 440 596 A1**

# (12) EUROPÄISCHE PATENTANMELDUNG

(21) Anmeldenummer : **91890005.1**

(22) Anmeldetag : **15.01.91**

(51) Int. Cl.⁵ : **A01K 5/01**

(30) Priorität : **02.02.90 AT 222/90**

(43) Veröffentlichungstag der Anmeldung :
**07.08.91 Patentblatt 91/32**

(84) Benannte Vertragsstaaten :
**DE DK FR IT NL**

(71) Anmelder : **Bräuer, Michael**
**Ennserstrasse 14**
**A-4300 St. Valentin (AT)**

(72) Erfinder : **Bräuer, Michael**
**Ennserstrasse 14**
**A-4300 St. Valentin (AT)**

(74) Vertreter : **Hübscher, Heiner, Dipl.-Ing. et al**
**Spittelwiese 7**
**A-4020 Linz (AT)**

(54) **Futtertrog für Schweine.**

(57) Ein Futtertrog (1) für Schweine weist einen den Trog (3) aufnehmenden Sockel (2) und eine längsmittige lotrechte Trennwand (4) auf.

Um den Troginhalt einfach aber wirkungsvoll vor einer Verschmutzung durch die Tiere zu schützen, sind beidseits der Trennwand (4) abstehende, mit Abstand oberhalb des Trograndes (3a) waagrecht verlaufende Abweiserschienen (5) od. dgl. verlegt und/oder besitzt der Sockel (2) gegenüber dem Stallboden (6) überhängende Längsseitenwände (2a).

EP 0 440 596 A1

# FUTTERTROG FÜR SCHWEINE

Die Erfindung bezieht sich auf einen Futtertrog für Schweine, mit einem den Trog aufnehmenden Sockel und einer längsmittigen lotrechten Trennwand.

Um zu verhindern, daß Schweine in ihren Futtertrog misten, wurde bereits vorgeschlagen, den Trog auf einen Sockel zu setzen und die Tiere durch diese stufenartige Erhöhung des Troges davon abzuhalten, mit den Hinterbeinen in den Trog zu steigen. Diese sogenannten Stufentröge haben sich aber nur teilweise bewährt, da sie in der Praxis nur das wirklich rückwärtige Aufsteigen der Schweine auf den Sockel unterbinden. Die Tiere steigen aber weiterhin mit den Vorderbeinen auf den Sockel und dann auch seitlich in den Trog, so daß es erst wieder zu einem Verschmutzen des Futters kommt.

Der Erfindung liegt daher die Aufgabe zugrunde, diese Mängel zu beseitigen und einen Futtertrog der eingangs geschilderten Art mit einfachsten Mitteln so zu verbessern, daß die Tiere am Misten in den Trog sicher gehindert werden und ein Reinhalten des Troges gewährleistet ist.

Die Erfindung löst diese Aufgabe dadurch, daß beidseits der Trennwand abstehende, mit Abstand oberhalb des Trograndes waagrecht verlaufende Abweiserschienen od. dgl. verlegt sind und/oder der Sockel gegenüber dem Stallboden überhängende Längsseitenwände aufweist. Diese einfachen und aufwandsarm zu montierenden Abweiserschienen, die als Profile, Formrohre, Stangen u. dgl. hergestellt sein können, stören die Tiere nicht beim Fressen, da die köpfe zwischen Abweiserschienen und Trogrand ausreichend Platz zum Erreichen des Futters finden, sie hindern jedoch die Tiere daran, ihr Hinterteil seitlich bis über den Trograd zu bewegen und den kot in den Trog fallen lassen zu können. Die Abweiserschienen verlaufen daher in einer Höhe oberhalb des Sockels, die der durchschnittlichen Höhenlage des Hinterschenkels der Tiere entspricht, so daß die Tiere gegebenenfalls mit einem der Hinterbeine in den Trog steigen können, mit dem After jedoch immer außerhalb des Trograndes bleiben müssen, was eine Trogbeschmutzung ausschließt. Sind die Seitenwände des Sockels gegenüber dem Stallböden überhängend ausgebildet, wird der Abhalteeffekt gegen ein rückwärtiges Aufsteigen durch die schärfere Sockeloberkante verstärkt und außerdem wertvoller Platz im Stallbodenbereich gewonnen.

Sind die Abweiserschienen höhenverstellbar an der Trennwand befestigt, kann die Lage dieser Schienen mit wenigen Handgriffen a n die Größe der jeweiligen Tiere angepaßt werden.

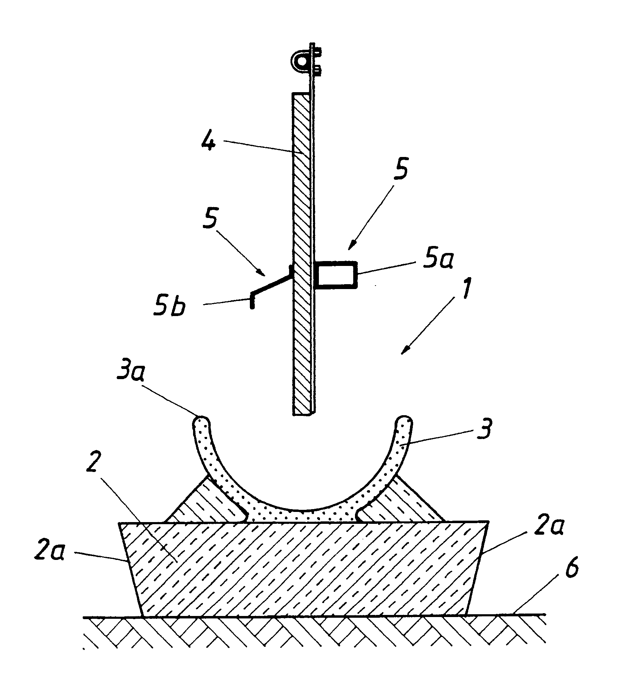

In der Zeichnung ist der Erfindungsgegenstand rein schematisch an Hand eines im Vertikalschnitt dargestellten Ausführungsbeispieles näher veranschaulicht.

Ein Futtertrog 1 für Schweine, ein sogenannter Stufentrog, weist einen Sockel 2 zur Aufnahme des Troges 3 auf und eine längsmittig verlaufende lotrechte Trennwand 4 sorgt bei beidseitiger Zugänglichkeit zum Trog für eine Abgrenzung zwischen diesen Zugangsseiten.

Um zu verhindern, daß die Tiere in den Trog 3 misten, sind beidseits der Trennwand abstehende Abweiserschienen 5 vorgesehen, die beispielsweise als Formrohr 5a oder Profil 5b ausgebildet sind. Diese Abweiserschienen 5 verlaufen mit Abstand oberhalb der Trogränder 3a und verhindern so, daß die auf den Sockel 2 aufsteigenden Tiere mit ihrem Hinterteil seitlich zu weit über den offenen Trogbereich gelangen können. Ein rückwärtiges Aufsteigen der Tiere wird durch die vom Sockel 2 gebildete Stufe verhindert, wobei dieser Abhalteeffekt durch die dem Stallboden 6 gegenüber überhängenden Längsseitenwände 2a verstärkt wird, welcher Längsseitenwandüberhang zusätzlich wertvollen Stallplatz freimacht.

Um entsprechend wirkungsvoll zu sein, verlaufen die Abweiserschienen 5 etwa in einer der Höhenlage der Tieroberschenkel entsprechenden Höhe, also etwa 40 bis 60 cm oberhalb des Sockels 2, und stehen etwa um ein Viertel der Trogbreite, beispielsweise 5 bis 15 cm, von der Trennwand ab.

Beim erfindungsgemäßen Futtertrog 1 wird auf sehr einfache, aufwandsarme und platzsparende Weise ein sicherer Schutz vor Verschmutzung des Troginhaltes gewährleistet.

## Patentansprüche

1. Futtertrog (1) für Schweine, mit einem den Trog (3) aufnehmenden Sockel (2) und einer längsmittigen lotrechten Trennwand (4), dadurch gekennzeichnet, daß beidseits der Trennwand (4) abstehende, mit Abstand oberhalb des Trograndes (3a) waagrecht verlaufende Abweiserschienen (5) od. dgl. verlegt sind und/oder der Sockel (2) gegenüber dem Stallboden (6) überhängende Längsseitenwände (2a) aufweist.

2. Futtertrog nach Anspruch 1, dadurch gekennzeichnet, daß die Abweiserschienen (5) höhenverstellbar an der Trennwand (4) befestigt sind.

Europäisches
Patentamt

**EUROPÄISCHER RECHERCHENBERICHT**

Nummer der Anmeldung

EP 91 89 0005

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | FR-A- 583 696 (P.F.G. DURAND-SAINT-LEGER) * Seite 1, Zeilen 49-62; Abbildungen 1,2 * | 1 | A 01 K 5/01 |
| A | --- | 2 | |
| Y | DE-A-3 802 989 (IBO-STALLTECHNIK GMBH) * Spalte 3, Zeilen 5-15; Abbildung 1 * --- | 1,2 | |
| Y | FR-A-2 460 614 (J. SUTTER) * Seite 3, Zeilen 10-27; Abbildungen 1,2 * --- | 1,2 | |
| A | CH-A- 427 394 (J. SUTTER) * Seite 1, Zeilen 26-40; Abbildungen 1,2 * ----- | 1,2 | |
| | | | RECHERCHIERTE SACHGEBIETE (Int. Cl.5) |
| | | | A 01 K |

Der vorliegende Recherchenbericht wurde für alle Patentansprüche erstellt

| Recherchenort | Abschlußdatum der Recherche | Prüfer |
|---|---|---|
| BERLIN | 19-04-1991 | MARTIN DEL RIO A |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
   Dokument

EPO FORM 1503 03.82 (P0403)